# EUROPEAN PATENT APPLICATION

(11) **EP 2 941 968 A1**
(43) Date of publication of application: **11.11.2015**
(21) Application number: 15175286.2
(22) Date of filing: 12.05.2006
(51) Int. Cl.: A23L 3/32, A23B 7/06, A23N 12/02, B01J 19/08, A23L 1/025, A23N 1/00, A23N 1/02

(54) **Device for electroporation of potatoes and potato products**

(30) Priority: 12.05.2005 SE 0501137; 26.05.2005 US 684555 P
(62) Divisional of application: 06747776.0
(71) Applicant: Estrella Maarud Holding AS, Lysaker (NO)
(72) Inventor: Lindgren, Martin, 148 40 Segersäng (SE)
(74) Representative: Becker Kurig Straus

(57) **Abstract**

The present invention relates to potato products obtainable from potatoes treated by a process comprising the steps of applying an electric field to the potatoes, using such a field strength that pores are created in the cell membranes of the potatoes, resulting in an enhanced rate of mass transfer of intracellular and/or extracellular substances from said potatoes, which can be removed from the potatoes by washing in a liquid at low temperatures. The invention also relates to devices for the electroporation treatment.

## Description

### Technical Field

The present invention relates to a method for continuous treatment of plant, cellular material with an electrical field to produce holes (pores) in the cell membranes which is known as electroporation. The electroporation process will enhance mass transfer of intracellular substances in said plant, cellular material. In particular, the present invention relates to potato products obtainable from potatoes treated in accordance with such a process, and devices for the electroporation of the plant cellular material.

### Background of the invention

In the process of preparing deep-fried potato products such as chips and French fries, the conventional process comprise several treatment steps; a cleaning step, where all foreign material attached during harvesting are removed; a peeling step, where the potato skin is removed; a slicing step, where the potatoes are cut or sliced into the desired shape; a blanching step, comprising washing and preheating where the slices are washed and most of the starch and reducing sugars released during the slicing step and present on the surface of the slices, are removed; and finally the frying step where the actual cooking in oil takes place.

The washing/blanching step is a large user of both water and energy at the plant. During the growth of the potato, sugars in the potato are converted to starch and in a mature potato the sugar level is normally below 2 %, but differs greatly between varieties. These starches can revert back to sugar if the potato is not stored or transported properly after the harvest. Potatoes which contain high levels of sugar produce brown potato chips which are considered undesirable by consumers. Another reason to keep the content of reducing sugars low in the potato product to be used in frying is the propensity of sugars to form acrylamide in the presence of the amino acid asparagine and high temperatures. In order to reduce the amount of sugar some potato chip manufacturers wash or blanch their raw chip slices in hot water (80 °C to boiling). This method will result in lighter color chips by removing some of the sugars and inactivating some enzymes causing off-flavors or off-colors. However this treatment will in addition to the sugars, leach any soluble material, such as for example minerals and starch from the slices, resulting in some loss in crispiness and flavor, while increasing oil absorption in the chip. The wastewater generated from the blancher causes problems when released into the sewage system as it has an extremely high starch content (each 100 tons of processed potatoes produce approximately 2-3 tons of starch). As the water is heated at the blanching step the starch tends to swell and gelatinize and clog the sewage system. The amount of waste will increase as the water trapped in the gelatinized starch is difficult to release.

Thus, it would be beneficial to both the finished potato product and the wastewater sewage system if the release of internal substances from the potato cell walls could be controlled in some way.

US patent 6,405,948 discloses a method for liberating intracellular matter from biological material having cells with cell walls, wherein the cell walls are subjected to rapid pressure increases and decreases, exceeding the elastic limits of the cell walls, thereby opening the cell walls and liberating the intracellular material from the cells. The intracellular material and cell wall fragments are separated further.

One way of introducing substances into biological cells is the technique electroporation known to the molecular biologist, whereby DNA is physically introduced into a cell. A cell suspension is placed in the cuvette and a solution of DNA fragments containing the gene of interest is added. A direct current pulse is discharged in the cuvette suspension. The DC pulse is thought both to disrupt temporarily the membrane and to electrophorese DNA directly into cells. The cells are put in culture and assayed after various times for the acquired characteristics introduced by the DNA fragment.

The US Patent 5,690,978 by Yin et al. 1997 discloses a pulse electric field (PEF) treatment chamber used for the inactivation of bacterial spores in liquid food products. Each electrode includes an electrode flow chamber for making electrical contact with the pumpable food product and for allowing the pumpable food product to flow through the treatment device. The insulator is situated between the electrodes and includes an insulator flow chamber positioned between the electrode flow chambers and provides for the flow of pumpable food product from one electrode flow chamber to the other. A high voltage pulse generator applies a high voltage signal of variable voltage, frequency and pulse duration to the electrodes.

### Summary of the invention

The present invention relates to a method for continuous treatment of plant, cellular material with an electrical field to produce holes (pores) in the cell membranes which is known as electroporation. The electroporation process will enhance mass transfer of intracellular substances in said plant, cellular material. In particular, the present invention relates in a first aspect to potato products obtainable from potatoes treated in accordance with such a process. The present invention also relates to sliced raw potatoes for the manufacture of potato chips, the potatoes being treated in accordance with such a process.

The process for treating plant cellular material, comprising the steps of:
- applying an electric field to the plant cellular material, using such a field strength that pores are created in the cell membranes of the plant cellular material, enhancing the rate of mass transfer of intracellular and/or extracellular substances from said plant cellular material, and
- removing said intracellular and/or extracellular substances from the plant cellular material by washing in a liquid at low temperatures.

In particular the above process is characterized as follows: The applied electric field is a pulsed electric field in the form of rectangular (exponential) mono polar (bipolar) pulses and;
the rectangular (exponential) mono polar (bipolar) pulses are in a preferred range of 0.2-10 kV/cm, more preferably 0.5-3.0 kV/cm, and most preferably on the order of 1.2 kV/cm, and;
the number of pulses applied is preferably from 1-500, more preferably 2-100 and most preferably 50, and;
the duration of the pulses applied is 2-500 microseconds, more preferably 5-150 and most preferably 10 microseconds, and;
the repetition rate for the applied pulses is 10 - 500 Hz, more preferably 50-200 and most preferably 100 Hz, and;
the total energy applied by the pulses is 0.01 - 5.0 kJ/kg, more preferably 0.1-1.0 kJ/kg and most preferably 0.4 kJ/kg, and;
the conductivity of the plant cellular material suspension is 0.01 - 0.10 S/m, more preferably 0.02-0.08 S/m and most preferably 0.04 S/m, and;
the electric field strength applied on the two electrodes is of the order of 0.2 - 10 kV/cm, more preferably 0.5 - 3.0 kV/cm, and most preferably on the order of 1.2 kV/cm and;
the ratio of potatoes/potato slices to liquid going through the treatment chamber is in the range of 1:1 - 1:20, more preferably 1:8 - 1:12, and most preferably 1:10, and
the flow of potatoes/potato slices to liquid going through the treatment chamber is in the range of 1 to 60 tonnes an hour, more preferably 20 to 40, and most preferably 36 tonnes an hour.

The liquid in the washing step is water or a solution of salts in water, where;
the temperature of the water or liquid in the washing step is below 70 °C, more preferably below 60 °C, and most preferably below 46 °C, and;
the duration of the washing step is less than 30 minutes, more preferably less than 10 minutes and most preferably less than 5 minutes.

The plant cellular material is a fruit or a vegetable.

The vegetable is from the group comprising cauliflower, broccoli, Brussels sprouts, green beans, green peas, turnip, cabbage, nettles, spinach, tomato, cabbage, Swedish turnip, wild turnip, carrot, celeriac, black radish, beetroot, artichokes, asparagus, aubergine, bamboo shoots, breadfruit, chestnuts, kohl-rabi, onions, parsnip, horseradish, peppers, plantains, radishes, squash, tapioca and potatoes.

The vegetable is from the group of root vegetables comprising turnip, Swedish turnip, wild turnip, carrot, black radish, beetroot, kohl-rabi, onions, parsnip, horseradish, radishes and potato.

The root vegetable is potato.

The fruit is from the group comprising apples, pears, apricots, bananas, prunes, peaches.

The intracellular and/or extracellular substances are carbohydrates. The carbohydrates are sugars.

The sugars are reducing sugars.

The process wherein the transfer rate to the cellular material is enhanced and supplies an enzyme enhancing substance, such as calcium ions.

The present invention is concerned with potato products treated in accordance with the process described herein. Also encompassed are potato products with a reduced amount of sugars treated in accordance with the process described herein.

A further aspect of the invention is a device for the electroporation of plant cellular material, comprising:
- a treatment chamber;
- a pulse generator;
- at least two electrodes;
wherein said treatment chamber is arranged to receive plant cellular material in solid phase transported, with or without a liquid transport carrier, past at least two electrodes, where the pulse generator is arranged to apply a pulsed electric field enhancing the rate of mass transfer of intracellular and/or extracellular substances from said plant cellular material.

The device wherein the treatment chamber comprises at least one insulator positioned between the electrodes.

The device wherein the length of the insulator positioned between the electrodes is 2 to 50 cm, more preferably 10 to 35, and most preferably 24 cm.

The device wherein the diameter of the treatment chamber is 1 to 20 cm, more preferably 8 to 13 cm, and most preferably 12 cm.

The device wherein the pulse generator is arranged to apply an electric field in the range of 0.2 - 10 kV/cm, more preferably 0.5 - 3.0 kV/cm, and most preferably in the order of 1.2 kV/cm.

Also encompassed is a device for the electroporation of plant cellular material, comprising a treatment chamber, a pulse generator, and at least two electrodes, wherein said treatment chamber is arranged to receive plant cellular material in solid phase transported, with or without a liquid transport carrier, past at least two electrodes, where the pulse generator is arranged to apply a pulsed electric field enhancing the rate of mass transfer of intracellular and/or extracellular substances from said plant cellular material, wherein the treatment chamber comprises a rotating drum with at least one opening on the periphery of the drum with a sharp edge for cutting or slicing objects passing through the opening and wherein the at least two electrodes each are positioned adjacent to an opening side. Preferably one electrode may form the sharp edge.

The device wherein the electrodes are formed circumferentially on the treatment chamber outer periphery.

The device wherein a conveyor belt transports the plant cellular material.

The device wherein a triggering device is positioned so as to detect a presence of the plant cellular material at a position for treatment.

The device wherein one electrode is at a ground potential.

The device wherein the treatment chamber further comprises safety ground electrodes at two ends of the treatment chamber.

These and other aspects of the invention will be apparent from and elucidated with reference to the embodiments described hereinafter.

### Brief description of the figures

In the following the invention will be described in a non-limiting way and in more detail with reference to exemplary embodiments illustrated in the enclosed drawings, in which:
Figure 1 is an overview of the basic steps where the present invention is applied to potato chip processing.
Figure 2 is a treatment chamber (electrode configuration) according to the present invention.
Figure 3 is a detail of the treatment chamber described in figure 2.
Figure 4 is a treatment chamber according to the present invention of round (or rectangular, not shown) cross-section with internal electrodes.
Figure 5 is a treatment chamber according to the present invention made of two side mounted electrodes and a conveyor belt submerged in water.
Figure 6 is a treatment chamber according to the present invention made of one top mounted high voltage electrode and a conveyor belt serving as a ground electrode.
Figure 7 is a treatment chamber according to the present invention made of a flexible tube with inserts of electrodes.
Figure 8 is a rotating treatment chamber according to the present invention.

### Detailed description of the invention

The term plant cellular material is intended to mean plant material as such as fruits and vegetables, wherein the group of vegetables comprises cauliflower, broccoli, Brussels sprouts, green beans, green peas, turnip cabbage, nettles, spinach, tomato, cabbage, Swedish turnip, wild turnip, carrot, celeriac, black radish, beetroot, artichokes, asparagus, aubergine, bamboo shoots, breadfruit, chestnuts, kohl-rabi, onions, parsnip, horseradish, peppers, plantains, radishes, squash, tapioca and potatoes and;
the group of fruits comprises apples, pears, apricots, bananas, prunes, peaches. The present invention will be described in relation to potatoes, however, without being restricted thereto.

The term potato product is herein intended to comprise potato products such as French fries, potato chips, potato crisps.

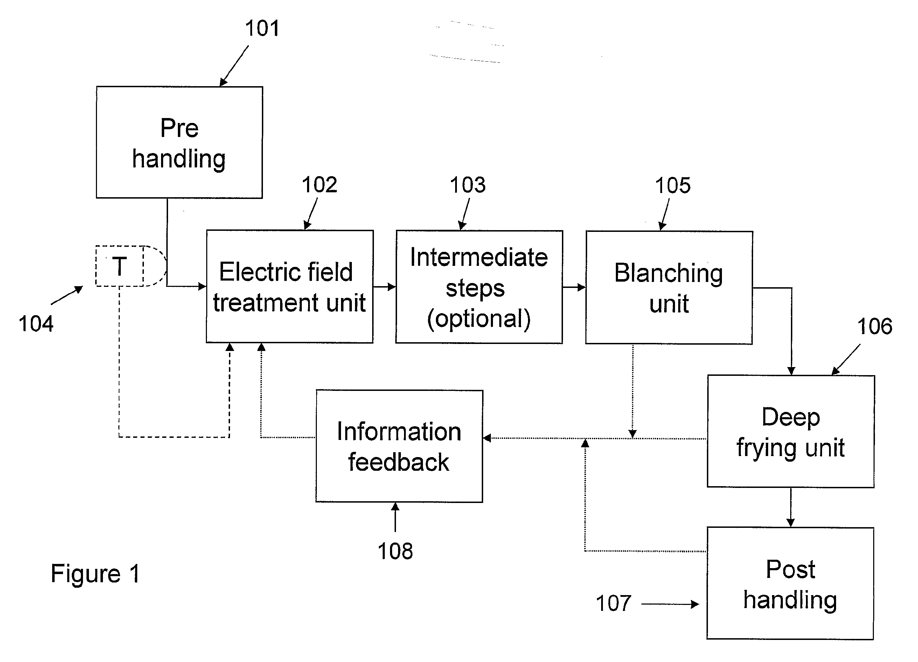

In the present invention a washed and peeled, raw, sliced or whole potato undergoes a treatment method (Figure 1) wherein an alternating electric field is applied 102. The alternating electric field may comprise pulses or other shapes. The present invention includes the steps of transporting the potatoes through a PEF (pulsed electric field) treatment device 200 so as to create a flow of potatoes, one or several at the same time through the device, generating a pulsed electric field, and subjecting the pulsed electric field to the potatoes. The applied electric field is in an ideal shape of, but not limited to, rectangular mono polar pulses of electric fields in a preferred range of 0.2 - 10 kV/cm, more preferably 0.5 - 3.0 kV/cm, and most preferably on the order of 1.2 kV/cm. However, it should be understood by the person skilled in the art that due to practical implications in the electrical setup, the shape will be slightly distorted (e.g. non-rectangular with slightly distorted edges). Other embodiments of this invention may use exponential decay pulses, continuous sinus exposure, in the mono or bipolar form. Each object is subjected to a number of pulses where the number of pulses is preferably from 1 - 500, more preferably 2 - 100, and most preferably 50 with a preferred pulse duration of 2 - 500 microseconds, more preferred duration of 5 - 150 microseconds, and most preferred 10 microseconds, at a preferred pulse repetition rate of 10 - 500 Hz, more preferred 50 - 200 Hz, and most preferred 100 Hz. The total energy delivered to the potato suspension is preferably 0.01 - 5.0 kJ/kg, more preferably 0.1 - 1.0 kJ/kg, and most preferred 0.4 kJ/kg. In a suitable arrangement, it is possible to use supplied alternating currents directly without transformation and/or reshaping into pulses, i.e. the supply voltage (e.g. 50 Hz 240 Volts or 60 Hz 110 Volts) can directly drive electrodes.

The application of an electric field to the potato creates holes (pores) in the cell membranes of the potato, enhancing the transfer rate of molecular substances in general. This process, called electroporation, facilitates or enables the extraction of intracellular substances from the cells. By fine tuning the electroporation process (e.g. applying the optimal amount of pulses of optimal energy and duration) pores of an optimal size may be created, making the cell membranes act as "molecular sieves" keeping large molecules such as starch on the inside of the cells, while smaller molecules such as e.g. reducing sugars, diffuse through the enlarged pores and easily be washed off in a subsequent washing step 103.

Due to the reduced amount of released starch, it is possible to use starch rich potatoes, which is difficult using conventional techniques available today. Such starch rich potatoes are less expensive than other types of potatoes and therefore this is of advantage for the industry.

Electroporation may also facilitate the migration of molecular substances into the cells. Such molecular substances may come from the processing transportation/washing liquid and be added ions, for example Calcium ions. Calcium ions improve the activity of the enzyme pectin-methyl-esterase (PME) which is an enzyme inducing pectin structures leading to an improved crispiness of the final product.

In the case where the electroporation treatment is applied to whole raw potatoes, before the slicing/cutting step, the potato can be sliced with less effort and wear of knives, leaving smother cutting surfaces with less internal cracks than during the regular cutting/slicing process. Cutting and slicing potatoes induce a quality degrading release of starch granules from the injured potato cells on the cut surface. It also induces quality degrading enzymatic reactions leading to discoloration etc. An advantage of applying the electroporation treatment step before the cutting is that less of these reactions are induced due to less mechanical stress.

This extraction, and/or a possible migration into or out from the cells during the electroporation treatment, can be implemented at such temperatures that the rate of change of molecular structure or rate of any chemical or enzymatic reactions, involving the targeted substances or processed potato can be reduced or avoided. For example, starch granules are insoluble in cold water but start to hydrate and gelatinize in water at temperatures above 60-70 °C. Thus, due to the low temperatures generated in the electroporation process it is possible to greatly reduce the amount of process water due to the absence of formation of gelatinized starch and the washing step is performed at temperatures preferably below 70 °C, more preferably below 60 °C, and most preferably below 46 °C.

The electroporation process has a further advantage in that it allows a shortening of the time, and/or lowering of the temperature in the optional subsequent blanching step 104 as the mass transfer rate is increased in general.

In the subsequent frying step 105, a certain amount of water needs to be extracted from the potato product in order to obtain the optimal crispiness of the final product. An advantage of the present invention is that it reduces the time required to extract the necessary amount of water from the potato slices in a deep frying unit in order to reach this optimal crispiness. It may also make it easier for the oil to leave the deep fried potato product.

The electroporation process can be controlled through a feedback system 107 ensuring product quality, e.g. the chip colour after deep frying depends on the concentration of trapped reducing sugars (glucose, fructose) inside the potato cells, which may be controlled using this process. The concentration of starch in the waste water may be measured and controlled as may the concentration of acrylamide (by for instance amino acids or reducing sugars), fat content, hardness, or crispiness of the potato chips.

The cleaned potatoes which are, peeled or unpeeled 101, uncooked, whole or sliced, will primarily be transported into the treatment chamber one by one, or several at the time submerged in water or other suitable liquid (e.g. salt solution). The transportation of potatoes in a liquid will simultaneously serve as part of the washing/blanching step. The liquid used to transport the whole or sliced potatoes through the treatment chambers will extract and remove the molecular substances (e.g. reducing sugars) released from the cells and surfaces of the potato. This washing/blanching step is performed at temperatures preferably below 70 °C, more preferably below 60 °C, and most preferably below 46 °C and has a duration of preferably less than 30 minutes, more preferably less than 10 minutes and most preferably less than 3 minutes. The washing step can be followed by an optional blanching step at temperatures preferably below 70 °C, more preferably below 60 °C, and most preferably below 46 °C but may optionally be executed at higher temperatures (> 80 °C).

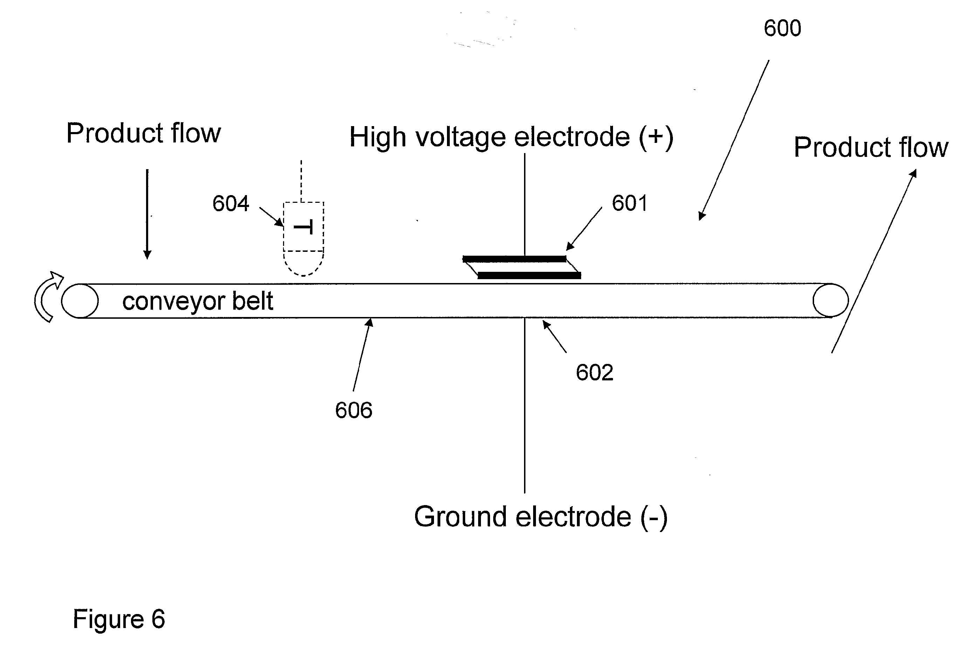

However, the processing chambers disclosed in figures 6, 7 and 8 can process the potatoes, whole or sliced, without water or other suitable liquid, and a separate washing step will be required to extract and remove the molecular substances.

Optionally a trigger device 104 may be used in order to control the start of the treatment when a potato to be treated passes the trigger device 104.

In a further embodiment of the invention the electroporation process is not instantaneous but instead a gradual change of the potato under treatment. Potatoes that are under such a treatment may change their conductivity as they gradually change their cellular structure. The electrical conductivity of the potato depends on the number and size of pores. By measuring the conductivity during the treatment process it may be possible to further enhance the control of the treatment, for instance by measuring the conductivity during and/or between each applied voltage pulse. A trigger level may be pre set and when the set trigger level has been reached, the treatment is stopped. In a continuous process of potatoes passing in between the electrodes this may be of advantage since then an optimal number of pulses may be applied instead of a standard number. For instance, potatoes come in a varied assortment of sizes and thus the treatment can be optimized for each potato. The conductivity may be measured through the potato or through the potato and liquid under treatment.

A method according to this can be illustrated by the following steps:
1. Apply an electric field pulse;
2. Measure the conductivity;
3. Check if conductivity trigger level is reached;
4. If the trigger level is not reached, continue with another pulse and so on until the preset conductivity trigger level is reached; and
5. Stopping the treatment when the preset trigger level is reached.

### Example 1

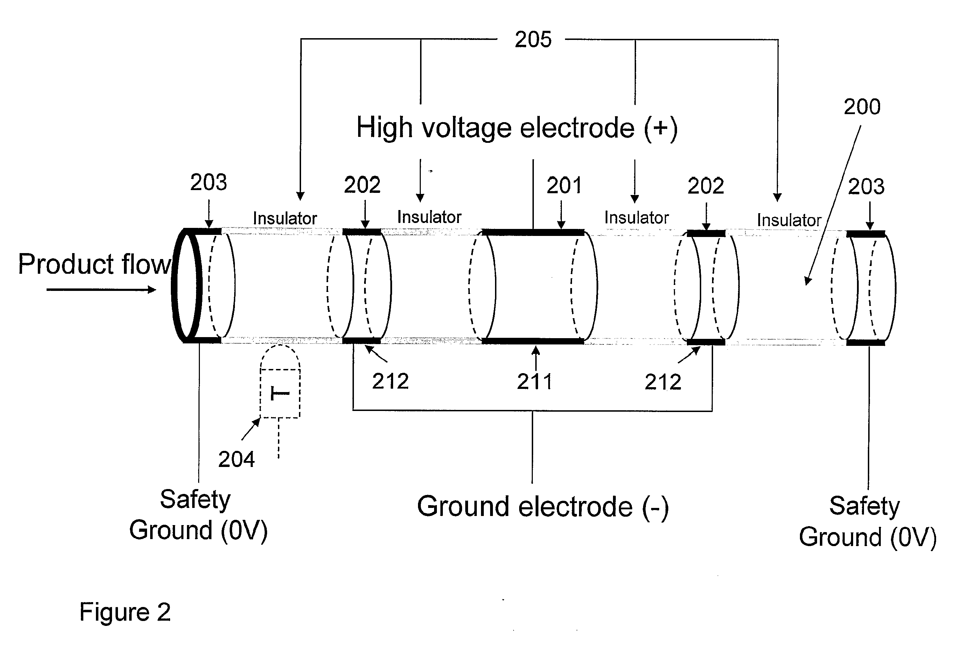

In one embodiment of the present invention a pulse electric field (PEF) treatment chamber (see Figure 2) 200 based on the US Patent 5,690,978 by Yin et al. 1997 (hereby incorporated by reference herein) with some modifications is used for the potato electroporation process. The electroporation treatment using said (PEF) treatment chamber (200) with the modifications, applied to a potato will be described.

The PEF treatment device includes at least two electrodes 201, 202 for subjecting the potato to an electric field. Each electrode includes a flow chamber 211, 212 for accepting the flow of the potatoes and when an electric field is applied the potatoes are subjected to the electric field and treated according to the present invention.

Electrode material may be of any conductive material, which preferably does not interact chemically with potatoes or other vegetables and/or transport liquid, such as, but not limited to, stainless steel, carbon (graphite) or titanium; however other materials may be used, e.g. aluminium or copper, or alloys or composites of materials.

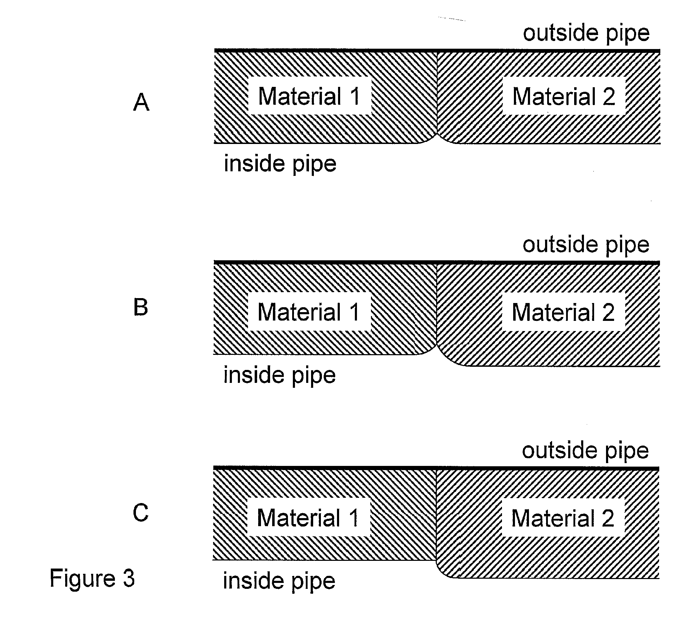

The PEF treatment device also includes at least one insulator 205 positioned between the two (or pluralities of) electrodes 201, 202. The electrode flow chambers 211, 212 and the insulation flow chambers 205 are configured and positioned so as to form a single tubular shaped flow chamber 200 for accepting the flow of the potatoes, electrically insulating the electrodes 201, 202 from each other. The electrode and insulation surface inside the treatment chamber will preferably intersect at right angles (90 °) in order to avoid electric field stress, i.e. keeping the electric field more uniformly throughout the chamber. Figure 3A-C depicts such embodiments where material 1 is the electrode and material 2 is the insulator, or vice-versa. The preferred diameter range of the treatment chamber is 1 to 20 cm, more preferably 8 to 13 cm, and most preferably 12 cm in the case of potato treatment, however other dimensions may be suitable when treating other types of plant material. The preferred electrode distance (length of insulator) is 2 to 50 cm, more preferably 10 to 35, and most preferably 24 cm. Two safety ground electrodes 203 have been added upstream and downstream the electrode-insulator tube. This description is intended for, and will also be suitable for, whole potato tubers (peeled or not). The PEF treatment system for electroporation of potatoes also includes a high voltage pulse generator (not shown) for supplying a pulsed electric field.

The present invention further provides a method of inducing a pulsed electric field in potatoes for the electroporation treatment. The method includes the steps of transporting the potatoes through the PEF treatment device 200 so as to create a flow of potatoes, one or several at the same time through the device, generating a pulsed electric field, and subjecting the pulsed electric field to the potatoes. The applied electric field is in an ideal shape of, but not limited to, rectangular mono polar pulses of electric fields in a preferred range of 0.2 - 10 kV/cm, more preferably 0.5 - 3.0 kV/cm, and most preferably on the order of 1.2 kV/cm. However, it should be understood by the person skilled in the art that due to practical implications in the electrical setup, the shape will be slightly distorted (e.g. non-rectangular with slightly distorted edges). Other embodiments of this invention may use exponential decay pulses, continuous sinus exposure, in the mono or bipolar form. Each object is subjected to a number of pulses where the number of pulses is preferably from 1 - 500, more preferably 2 - 100, and most preferably 50 with a preferred pulse duration of 2 - 500 microseconds, more preferred duration of 5 - 150 microseconds, and most preferred 10 microseconds, at a preferred pulse repetition rate of 10 - 500 Hz, more preferred 50 - 200 Hz, and most preferred 100 Hz. The total energy delivered to the potato suspension is preferably 0.01 - 5.0 kJ/kg, more preferably 0.1 - 1.0 kJ/kg, and most preferred 0.4 kJ/kg. The conductivity of the water suspension is preferably 0.01 - 0.50 S/m, more preferably 0.02 - 0.08 S/m, and most preferably 0.04 S/m. The ratio of potatoes/potato slices to transporting liquid is preferably in the range of 1:1 - 1:20, more preferably 1:8 - 1:12, and most preferably 1:10. This mixture will run through a treatment chamber, part of which is depicted in figure 2. The flow of mixture will be of the order of 1 - 60 tonnes an hour, more preferably 20 - 40, and most preferably 36 tonnes an hour. An approximation of the electric field strength (kV/cm) is given by the applied voltage difference (kV) on the electrodes 201, 202 divided by the electrode distance (cm). An approximation of the number of pulses is given by dividing the residence time (s) by the pulse repetition rate (1/s). The residence time is given by dividing the electrode distance (cm), times 2 for the setup in figure 2, by the flow velocity (cm/s), which in turn is given by dividing the flow (cm³/s) by the cross-section of the pipe (cm²). Subsequent to the electroporation process the treated potatoes are passed on to an optional blanching step or in the case of whole potatoes to a cutting/slicing step before the washing step.

The voltage difference applied to the two electrodes 201, 202 is preferably of the order of 0.1 - 50 kV, more preferably 10 - 40 kV, and most preferably 30 kV. However, it should be understood by the person skilled in the art that the voltage difference depends on the distance between electrodes as an electric field strength per unit length of a certain value will be achieved. The pulse generator supplying the pulses is of standard type, as understood by the person skilled in the art and may be commercially available.

Some of these embodiments make use of an optional triggering device 204 detecting the potato about to be treated, and initiates the electroporation process. This triggering device may for instance use mechanical methods, radiation, sound, or electromagnetic based detection (e.g. optics, microwaves, and inductive sensors) to detect the potatoes or it may sense the presence of the potato between the electrodes as a change in electrical properties (e.g. conductance, capacitance) in the vicinity of the triggering device. The electrical properties may be measured with a separate device for measuring electrical properties or the electrodes 201, 202 may be used for the same purpose.

### Example 2

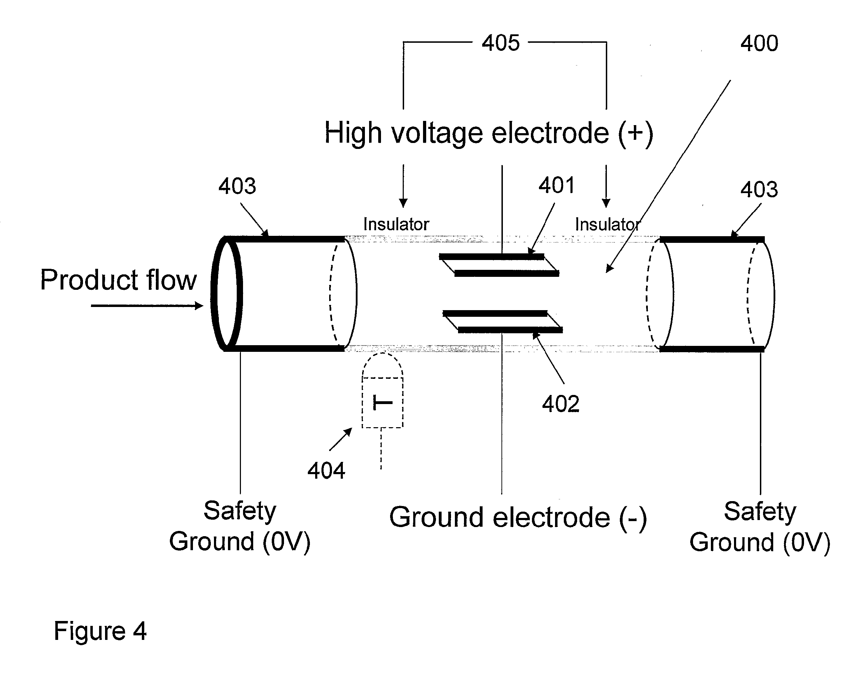

Another embodiment of the present invention is depicted in Figure 4. In this embodiment the electrodes 401, 402 may be mounted in, or close to, the insulating pipe wall and be of any shape. The treatment chamber 400 may have an oval or rectangular cross- section at the place of and/or near the electrodes. The preferred design have parallel rectangular electrodes 401, 402, e.g. with rounded edges, mounted vertically inside and close to the pipe wall, with a preferred electrode distance of 1-30 cm, more preferred 5- 15, and most preferred 12 cm. Insulator 405 is provided and an optional triggering device 404 is also provided. Again safety ground electrodes 403 are provided at the respective ends of the treatment chamber 400. The transport and treatment process of the potatoes is the same as described for the embodiment in Example 1.

### Example 3

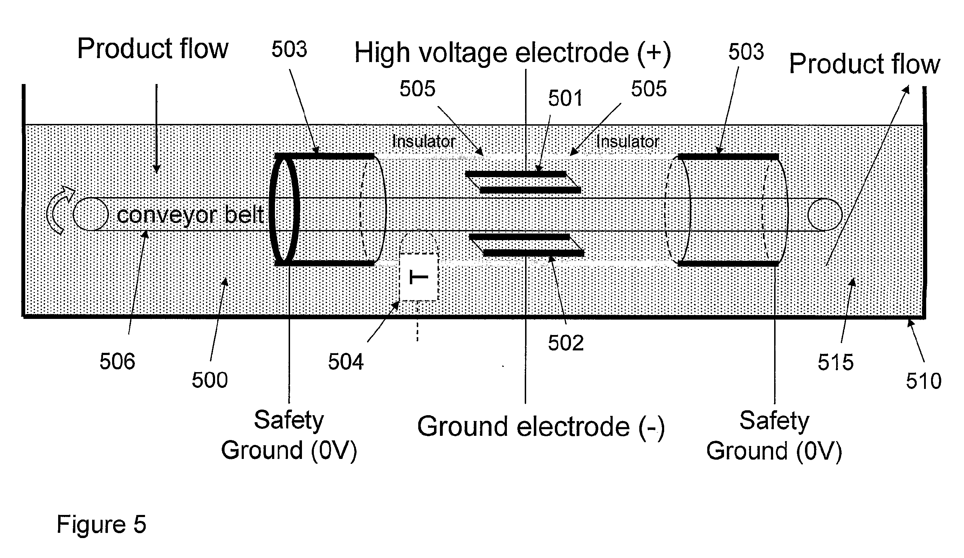

Figure 5 illustrates an embodiment of the invention which is slightly modified compared to the one in Example 2 in that a conveyor belt 506 submerged in liquid (e.g. water) 515, is responsible for transporting the potato through the treatment chamber 500. Alternatively with a suitable orientation of the treatment chamber 500, gravity can transport the potato through treatment chamber 500. An insulator 505 and an optional triggering device 504 is also provided. Again safety ground electrodes 503 are provided at the respective ends of the treatment chamber 500.The treatment process of the potatoes is the same as described for the embodiment in Example 1.

### Example 4

In one further embodiment illustrated in Figure 6 the treatment device 600 is made of one top mounted high voltage electrode 601 (may be an electrically conductive conveyor belt mounted upside down) and an electrically conductive conveyor belt serving as a ground electrode 602. Only pieces of potatoes and with no added water are treated. In this embodiment both electrodes 601, 602 are in contact with the preferably whole and peeled potatoes before slicing. The treatment process of the potatoes is the same as described for the embodiment in Example 1, except that the potato pieces after the electroporation process will proceed to a device arranged to provide the washing step (not shown).

### Example 5

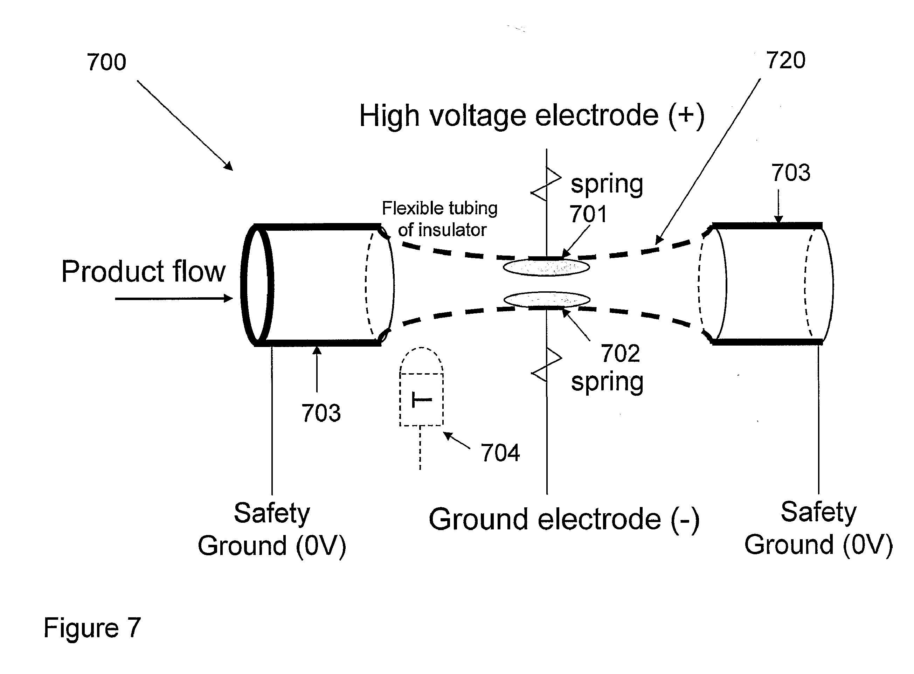

In a further embodiment of the invention the insulated treatment chamber described in Example 2 is made water penetrable and flexible in diameter by for instance being made of a nylon mesh 720 (Figure 7). The electrodes 701, 702 are part of the flexible treatment chamber 700 and made for instance of a wire mesh. This configuration is intended for treating whole or large pieces of potatoes, peeled or unpeeled, with or without water. Again safety ground electrodes 703 are provided at the respective ends of the treatment chamber 700.The transport and treatment process of the potatoes is the same as described for the embodiment in Example 1. If the electroporation treatment is performed without added liquid the treated potatoes will proceed to a device arranged to provide the washing step (not shown).

### Example 6

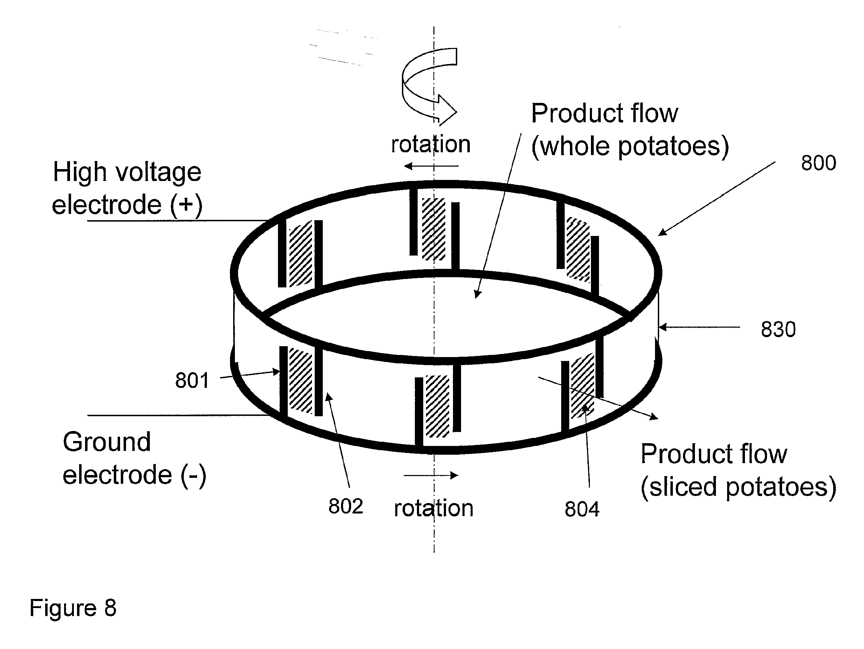

In one embodiment of the invention whole peeled potatoes are sliced for potato chips manufacturing during the electroporation process (Figure 8). The treatment chamber 800 is a modified rotating drum 830 often used in the potato chip industry to slice the potatoes. The rotating drum 830 is fed with raw, peeled, whole potatoes into the central portion of the drum, where the potatoes are forced toward the edge due to the rotation of the drum and subsequently forced to pass the knife section cutting and/or slicing the potatoes which emerge on the outside of the drum. The modification is mainly having the cutting knifes 801, 802 also serve as electrodes set at an electric potential different from the opposing surface on the other side of the space where the cut potato slices emerge. The spaces 804 in between the electrodes are hatched in this figure and represent the area where the sliced potatoes emerge while treated by electric fields. If the electroporation treatment is performed without added liquid the treated potatoes will proceed to a device arranged to provide the washing step (not shown).

The modifications involve for instance insulation of the high voltage electrodes and wiring. The applied voltage will be much less than previously indicated, preferably about 200 - 10 000 V, more preferably 380 - 1 000 V, and most preferably 600 V. The electric field strength will remain on the same order as previously described. The pulse repetition rate will be slightly higher and the number of pulses will be slightly less; preferably 1-200 pulses, more preferably 2-50 pulses, and most preferably 10 pulses.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be implemented by means of both hardware and software, and that several "means" may be represented by the same item of hardware.

The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A potato product obtainable from potatoes treated in accordance with a process, comprising the steps of:
- applying a pulsed electric field to the potatoes using such a field strength that pores are created in the cell membranes of the potatoes, for enhancing the rate of mass transfer of intracellular substances from said potatoes, and
- removing said intracellular substances from the potatoes by washing in a liquid at a temperature below 70 °C.

2. The potato product according to claim 1, wherein the potato product is/are potato chips.

3. The potato product according to claim 1 or 2, wherein the electric field strength applied is in the range of 0.2 - 10 kV/cm, preferably 0.5 - 3.0 kV/cm, and more preferably of the order of 1.2 kV/cm.

4. The potato product according to anyone of claims 1 to 3, wherein the total energy applied by the pulses is 0.01 - 5.0 kJ/kg, preferably 0.1 - 1.0 kJ/kg and more preferably 0.4 kJ/kg.

5. The potato product according to any one of claims 1 to 4, wherein the electric field is applied to whole raw potatoes.

6. The potato product according to any one of claims 1 to 5, wherein reducing sugars have been extracted from the plant cellular material and washed off in the subsequent washing step.

7. The potato product according to any one of claims 1 to 6, wherein whole potatoes are cut/sliced before the washing step.

8. The potato product according to any one of claims 1 to 7, wherein the process further comprises a frying step performed after the washing step.

9. Fried potato chips obtainable by the process according to claim 8.

10. Sliced raw potatoes for the manufacture of potato chips, wherein the potatoes are treated in accordance with a process comprising the steps of:
- applying a pulsed electric field to the potatoes using such a field strength that pores are created in the cell membranes of the plant cellular material, enhancing the rate of mass transfer of intracellular substances from said potatoes,
- slicing the potatoes, and
- removing said intracellular substances from the sliced potatoes by washing in a liquid at a temperature below 70 °C.

11. The sliced raw potatoes according to claim 10, wherein the electric field strength applied is in the range of 0.2 - 10 kV/cm, preferably 0.5 - 3.0 kV/cm, and more preferably of the order of 1.2 kV/cm.

12. The sliced raw potatoes according to claim 10 or 11, wherein the total energy applied by the pulses is 0.01 - 5.0 kJ/kg, preferably 0.1 - 1.0 kJ/kg and more preferably 0.4 kJ/kg.

13. The sliced raw potatoes according to any one of claims 10 to 12, wherein reducing sugars have been extracted from the plant cellular material and washed off in the subsequent washing step.

14. A device for the electroporation of potatoes, comprising:
- a treatment chamber (200);
- a pulse generator;
- at least two electrodes (201 , 202); wherein said treatment chamber (200) is arranged to receive whole potatoes in solid phase transported, with or without a liquid transport carrier, past at least the two electrodes (201, 202),
wherein the pulse generator is arranged to apply an electric field in the range of 0.2 - 10 kV/cm, more preferably 0.5 - 3.0 kV/cm, and most preferably in the order of 1.2 kV/cm, and
wherein the treatment chamber (200) comprises at least one insulator having a length of 2 to 50 cm, more preferably 10 to 35 cm, and most preferably 24 cm, positioned between the electrodes (201, 202).

15. The device according to claim 14, wherein the diameter of the treatment chamber (200) is 8 to 20 cm, more preferably 8 to 13 cm, and most preferably 12 cm.

16. A device for the electroporation of potatoes, comprising:
- a treatment chamber (500) comprising a conveyor belt (506) submerged in a liquid;
- a pulse generator;
- at least two electrodes (501, 502) mounted in, or close to, the insulating pipe wall of the treatment chamber; wherein said treatment chamber (500) is arranged to receive whole potatoes in solid phase transported, with or without a liquid transport carrier, past at least two electrodes (501, 502),
wherein the pulse generator is arranged to apply an electric field in the range of 0.2 - 10 kV/cm, more preferably 0.5 - 3.0 kV/cm, and most preferably in the order of 1.2 kV/cm.

17. A device for the electroporation of potatoes, comprising:
- a treatment device (600) made of one top mounted high voltage electrode (601) and an electrically conductive conveyor belt serving as a ground electrode (602);
- a pulse generator, arranged to apply an electric field in the range of 0.2 - 10 kV/cm, more preferably 0.5 - 3.0 kV/cm, and most preferably in the order of 1.2 kV/cm,
wherein said treatment device (600) is arranged to receive whole and peeled potatoes in solid phase transported, without a liquid transport carrier, past at least the two electrodes (601, 602), and
wherein the potatoes after the electroporation process will proceed to a device arranged to provide the washing step.
